# EUROPÄISCHE PATENTSCHRIFT

(11) **EP 1 917 821 B1**
(45) Veröffentlichungstag und Bekanntmachung des Hinweises auf die Patenterteilung: **22.10.2008**
(21) Anmeldenummer: 06753729.0
(22) Anmeldetag: 19.05.2006
(51) Int. Cl.: H04Q 7/38

(54) **VERFAHREN UND VORRICHTUNG ZUM IDENTIFIZIEREN EINES MOBILEN ENDGERÄTS IN EINEM DIGITALEN ZELLULÄREN MOBILFUNKNETZ**
METHOD AND DEVICE FOR IDENTIFYING A MOBILE TERMINAL IN A DIGITAL CELLULAR MOBILE RADIO NETWORK
PROCEDE ET DISPOSITIF PERMETTANT D'IDENTIFIER UN TERMINAL MOBILE DANS UN RESEAU DE TELEPHONIE MOBILE CELLULAIRE NUMERIQUE

(30) Priorität: 23.08.2005 DE 102005040002
(43) Veröffentlichungstag der Anmeldung: 07.05.2008
(60) Teilanmeldung: 08002827.7
(73) Patentinhaber: Thales Defence Deutschland GmbH, 75175 Pforzheim (DE)
(72) Erfinder: KOUADJO, Larisse, Nana, 75172 Pforzheim (DE); GUNZELMANN, Georg, 75446 Wiernsheim (DE)
(74) Vertreter: Wörz, Volker Alfred
(86) Internationale Anmeldenummer: PCT/EP2006/004747
(87) Internationale Veröffentlichungsnummer: WO 2007/022811

(56) Entgegenhaltungen:
- WO-A-01/60098
- WO-A-20/04082315
- WO-A-20/05011318
- DE-A1- 19 920 222
- "Universal Mobile Telecommunications System (UMTS); 3G security; Handover interface for Lawful Interception (LI) (3GPP TS 33.108 version 6.8.2 Release 6); ETSI TS 133 108" ETSI STANDARDS, EUROPEAN TELECOMMUNICATIONS STANDARDS INSTITUTE, SOPHIA-ANTIPO, FR, Bd. 3-SA3, Nr. V682, Januar 2005 (2005-01), XP014028214 ISSN: 0000-0001

## Beschreibung

Die vorliegende Erfindung betrifft ein Verfahren zum Identifizieren eines mobilen Endgeräts in einem digitalen zellulären Mobilfunknetz, in dem Daten nach einem ersten Protokoll übertragen werden. Außerdem betrifft die Erfindung einen in räumlicher Nähe zu einem zu identifizierenden mobilen Endgerät angeordneten Simulator zum Identifizieren des mobilen Endgeräts in einem digitalen zellulären Mobilfunknetz, in dem Daten nach einem ersten Protokoll übertragen werden.

Sicherheitskräften obliegen unter anderem die Aufgaben, bereits begangene Verbrechen aufzuklären bzw. noch nicht begangene Verbrechen abzuwehren. Ein wichtiger Aspekt bei der Erfüllung dieser Aufgaben ist die Möglichkeit, in Ausnahmefällen eine verdächtige Person anhand eines von ihr benutzten Mobiltelefons identifizieren und von der Person über das Mobiltelefon geführte Telefongespräche abhören, aufzeichnen und auswerten zu können. Die Sicherheitskräfte werden dazu durch einschlägige Rechtsvorschriften und Verordnungen ermächtigt. Ziel ist es dabei, die Kommunikations-Spuren einer verdächtigen Person zu erfassen und auszuwerten, um so die verdächtige Person bzw. das von ihr benutzte Mobiltelefon identifizieren und die geführten Gespräche aufzeichnen und auswerten zu können.

Aus dem Stand der Technik sind verschiedene Mobilfunknetze zur Datenübertragung bekannt. Sehr weit verbreitet sowohl bezüglich der Netzabdeckung als auch bezüglich der Anzahl der im Einsatz befindlichen mobilen Endgeräte sind GSM (Global System for Mobile Communications)-Mobilfunknetze. Seit einigen Jahren erhältlich und zunehmend weiter verbreitet sind UMTS (Universal Mobile Telecommunications System)-Mobilfunknetze. Diese beiden Standards unterscheiden sich bspw. hinsichtlich der Authentifizierung, des Integritätsschutzes und der Verschlüsselung. Während sich bei GSM lediglich das mobile Endgerät gegenüber einer Basisstation authentifizieren muss, ist bei UMTS auch eine Authentifizierung der Basisstation bei den mobilen Endgeräten vorgesehen. Im Rahmen des Integritätsschutzes bei UMTS werden die über das Mobilfunknetz zu übertragenden Steuerungsdaten bspw. durch Signieren gegen Fälschung geschützt. Zur Verschlüsselung der über das Mobilfunknetz zu übertragenden Daten werden bei UMTS besondere Verschlüsselungsverfahren eingesetzt, wie bspw. das Kazumi-Verfahren. Die Verschlüsselung betrifft bei UMTS sowohl die Nutzdaten als auch die Steuerungsdaten. Während in einem GSM-Mobilfunknetz zur Datenübertragung eine Kombination aus Frequenzmultiplexverfahren (FDMA - Frequency Divisional Multiple Access) und Zeitmultiplexverfahren (TDMA - Time Divisional Multiple Access) eingesetzt wird, findet in einem UMTS Mobilfunknetz ein Codemultiplexverfahren (CDMA - Code Divisional Multiple Access) Verwendung, bei dem die Daten (Signale) mehrerer Quellen oder Sender gleichzeitig auf derselben Frequenz übertragen werden. Dabei werden den Daten bestimmte Codemuster (sog. Scrambling Code) zugewiesen.

Des weiteren ist bspw. aus der DE 199 20 222 A1 ein Verfahren zum Identifizieren und Abhören eines mobilen Endgeräts in einem digitalen zellulären GSM-Mobilfunknetz bekannt. Aufgrund der oben beispielhaft und nicht vollständig angeführten Unterschiede zwischen einem GSM-Mobilfunknetz und einem Mobilfunknetz, in dem Daten nach einem Codemultiplexverfahren übertragen werden, wie bspw. einem UMTS-Mobilfunknetz, können die für GSM-Netze bekannten Verfahren nicht einfach auf UMTS-Netze übertragen werden.

Aus der Technical Specification ETSI 3GPP TS 33 108 Version 6.8.2 Release 6 vom Januar 2005 ist ganz allgemein die UMTS-Handover-Schnittstelle bei der sogenannten "lawful interception" beschrieben. Die "lawful interception" ist der Fachausdruck für ein Leistungsmerkmal, das alle technischen Einrichtungen öffentlicher Kommunikationsnetze bieten müssen. Die "lawful interception" betrifft die Möglichkeit, dass sich befugte staatliche Stellen wahlfrei auf bestimmte Kommunikationsverbindungen aufschalten und den dort laufenden Kommunikationsverkehr abhören können müssen. So müssen bspw. Vermittlungsstellen von Mobilfunknetzen derart ausgestaltet sein, dass sie dies ermöglichen. In der Technical Specification sind also die technischen Voraussetzungen beschrieben, die von UMTS-Handover-Schnittstellen erfüllt sein müssen, um die "lawful interception" zu ermöglichen. Wären die dort beschriebenen Voraussetzungen bei einem UMTS-Mobilfunknetz nicht erfüllt, wäre das Identifizieren oder Abhören von mobilen Endgeräten aufgrund fehlender technischer Voraussetzungen von vornherein ausgeschlossen.

In der WO 2005/011 318 A1 ist beschrieben, wie ein zum Zwecke des Abhörens eines mobilen Endgeräts in eine GSM-Funkzelle eingebrachter Simulator, der als virtuelle Basisstation betrieben wird, nur die Anmeldung des abzuhörenden Endgeräts akzeptieren und die Anmeldung anderer Endgeräte zurückweisen kann. Ziel ist es dabei, die Belastung der virtuellen Basisstation durch andere Endgeräte während des Abhörens des abzuhörenden Endgeräts zu verringern. Zu diesem Zweck ist die virtuelle Basisstation in der Lage, Abweisungssignale an Endgeräte zu versenden, die versuchen sich bei der virtuellen Basisstation anzumelden.

Der vorliegenden Erfindung liegt die Aufgabe zu Grunde, eine Möglichkeit zu schaffen, ein Mobiltelefon in einem Mobilfunknetzwerk, in dem Daten nach dem Codemultiplexverfahren übertragen werden, insbesondere in einem UMTS-Mobilfunknetz, zu identifizieren und - falls gewünscht - auch über das Mobiltelefon geführte Gespräche abzuhören.

Zur Lösung dieser Aufgabe wird ausgehend von dem Verfahren der eingangs genannten Art vorgeschlagen, dass
- in räumlicher Nähe zu dem zu identifizierenden Endgerät ein Simulator angeordnet wird;
- von einem Messsystem die für die Datenübertragung relevanten Parameter von Basisstationen des Mobilfunknetzes in räumlicher Nähe zum Simulator ermittelt und an den Simulator übergeben werden;
- der Simulator unter Berücksichtigung der ermittelten Parameter als eine neue Basisstation betrieben wird;
- das zu identifizierende Endgerät den Simulator als neue Basisstation erkennt und sich dort anmeldet, wobei
- eine Authentifizierungsprozedur gestartet wird, das zu identifizierende Endgerät die Authentifizierungsprozedur als fehlerhaft abweist, der Simulator eine Identifizierungsprozedur startet, in deren Verlauf der Simulator das zu identifizierende Endgerät nach seinen Identifikationsparametern fragt und der Simulator die Identifikationsparameter des zu identifizierenden Endgeräts empfängt; und
- das Endgerät im Umfeld des ersten Protokolls anhand der übermittelten Identifikationsparameter identifiziert wird.

Erfindungsgemäß werden Verfahren vorgeschlagen, mit denen für die Datenübertragung relevante Parameter von Basisstationen des Mobilfunknetzes in räumlicher Nähe zum Simulator ermittelt und zum Identifizieren des Endgeräts herangezogen werden können. Der Simulator ist dabei in räumlicher Nähe zu dem zu identifizierenden Endgerät, d.h. in der Funkzelle, in der das Endgerät eingebucht ist, angeordnet. Die ermittelten Parameter umfassen insbesondere die von den in räumlicher Nähe zu dem Simulator angeordneten Basisstationen verwendeten Scrambling Codes und/oder die Sendestärken der Basisstationen. Der Scrambling Code ist ein Codemuster, mit dem die verschiedenen Sender im Rahmen des Codemultiplexverfahrens zur Datenübertragung codiert werden. Dann wird der Simulator als neue Basisstation betrieben, allerdings mit einem anderen Location Area Code als die ursprüngliche Basisstation, bei der das zu identifizierende Endgerät ursprünglich eingebucht ist. Zu diesem Zweck verfügt der Simulator über geeignete Mittel, bspw. eine Basisstation, welche einen Betrieb des Simulators als Basisstation in dem Mobilfunknetz ermöglichen.

Außerdem sendet der Simulator Systeminformationen zwar in dem gleichen Frequenzband wie die ursprüngliche Basisstation, jedoch mit einer höheren Sendeleistung als die ursprüngliche Basisstation. Durch Aussendung eines anderen Location Area Codes (LAC) wird dem zu identifizierenden Endgerät eine Bewegung des Endgeräts in einen neuen räumlichen Bereich, dem der andere LAC zugeordnet ist, vorgetäuscht. Dadurch wird das Endgerät zur automatischen Anmeldung bei dem Simulator gezwungen. Zu diesem Zweck führt das Endgerät einen sogenannten Location Update aus.

Anhand der Identifikationsparameter kann dann eine Identifikation des Endgeräts erfolgen. Die Identifikationsparameter umfassen bspw. eine IMSI (International Mobile Subscriber Identity), eine TMSI (Temporary Mobile Subscriber Identity), P-TMSI (Packet TMSI) und/oder eine IMEI (International Mobile Equipment Identity). Diese Identifikationsparameter reichen aus, um ausgehend von dem Simulator zu dem identifizierten Endgerät eine Verbindung zum Zwecke des Abhörens von über das Endgerät geführten eingehenden oder abgehenden Gesprächen aufzubauen. Zu diesem Zweck verfügt der Simulator über geeignete Mittel, bspw. ein Endgerät, welche einen Betrieb des Simulators als Endgerät zum Verbindungsaufbau zu dem identifizierten Endgerät und zum Überwachen der Verbindung bzw. des Gesprächs erlauben.

Gemäß einer bevorzugten Ausführungsform der Erfindung ist das Messsystem als ein Monitor-Endgerät, das Teil des Simulators sein kann, ausgebildet. Da Endgeräte sowieso die für die Datenübertragung relevanten Parameter von Basisstationen des Mobilfunknetzes in räumlicher Nähe zum Endgerät ermitteln, können sie problemlos als Messsystem im Sinne der Erfindung eingesetzt werden.

Der eigentliche Name und die persönlichen Daten des Benutzers des Endgeräts sind beim Betreiber (sog. Provider) des Mobilfunknetzes abgelegt und können von dort beispielsweise im Rahmen einer Behördenanfrage erfragt werden. Nur beim Provider sind Cross-Reference-Listen verfügbar, die eine Zuordnung der IMSI zu einem Benutzer bzw. der IMSI zu einer Rufnummer ermöglichen. Die TMSI ist - wie der Name schon,sagt - lediglich temporärer Natur und erlaubt keine eindeutige Zuordnung zu einem bestimmten Benutzer oder einer bestimmten Rufnummer. Aus diesem Grund ist es wichtig, dass die IMSI und nicht nur die TMSI zur Verfügung steht.

Falls das zu identifizierende Endgerät beim Anmelden bei dem Simulator lediglich die TMSI (Temporary Mobile Subscriber Identity) als Identifikationsparameter übermittelt dann kann eine Authentifizierungsprozedur gestartet werden. Falls das zu identifizierende Endgerät jedoch eine Authentifizierungsprozedur erwartet, wird gemäß einer vorteilhaften Weiterbildung der Erfindung vorgeschlagen, dass im Anschluss an die Anmeldung des Endgeräts bei dem Simulator
- eine Authentifizierungsprozedur gestartet wird;
- das zu identifizierende Endgerät die Authentifizierungsprozedur als fehlerhaft abweist;
- von dem Simulator nochmals eine Identifizierungsprozedur gestartet wird, in deren Verlauf der Simulator das zu identifizierende Endgerät nach seiner IMSI (International Mobile Subscriber Identity) oder IMEI (International Mobile Equipment Identity) fragt; und
- der Simulator die IMSI oder die IMEI des zu identifizierenden Endgeräts empfängt.

Gemäß dieser Weiterbildung wird zunächst eine Authentisierungsprozedur gestartet. Da sich jedoch der Simulator bzw. die neue Basisstation als Teil des Simulators nicht ausweisen kann (was in UMTS-Netzen jedoch erforderlich ist), weist das zu identifizierende Endgerät die Authentifizierungsprozedur als fehlerhaft ab, bspw. aufgrund eines MAC-Fehlers. Nun startet der Simulator eine Identifizierungsprozedur, wodurch dem zu identifizierenden Endgerät vorgetäuscht wird, die neue Basisstation (die tatsächlich Teil des Simulators ist) benötige zu Identifikationszwecken die Identifikationsparameter (IMSI oder IMEI) des zu identifizierenden Endgeräts. Daraufhin übermittelt das Endgerät seine IMSI oder IMEI an den Simulator, anhand der eine eindeutige Identifikation des Endgeräts möglich ist.

Gemäß einer bevorzugten Ausführungsform der Erfindung wird vorgeschlagen, dass
- der Anmeldeversuch des zu identifizierenden Endgeräts bei dem Simulator, nachdem das Endgerät den Simulator als neue Basisstation erkannt hat, zurückgewiesen wird oder die Verbindung zwischen dem Endgerät und der neuen Basisstation auf andere Weise unterbrochen und/oder gestört wird; und
- aufgrund eines in dem Mobilfunknetz zur Datenübertragung verwendeten Protokolls das Endgerät zur automatischen Anmeldung bei einer anderen Basisstation einer anderen Funkzelle eines anderen Mobilfunknetzes zur Datenübertragung nach einem anderen Protokoll gezwungen wird.

Vorteilhafterweise wird das zu identifizierende Endgerät nach dem Zurückweisen des Anmeldeversuchs in dem Mobilfunknetz zur automatischen Anmeldung bei einer Basisstation einer GSM (Global System for Mobile Communication)-Funkzelle gezwungen. Vorzugsweise werden die über das identifizierte Endgerät und die GSM-Funkzelle geführten Telefongespräche mit Hilfe herkömmlicher Abhörverfahren für GSM-Mobilfunknetze abgehört.

Nach erfolgter Identifikation des Endgeräts wird das Endgerät also in ein herkömmliches GSM-Mobilfunknetz verwiesen. Dies kann bspw. durch definierte Informationselemente (IE), durch Stören (sog. Jammen) der UMTS-Verbindung oder auf andere geeignete Weise erfolgen. Bei einer Unterbrechung oder durch Stören der UMTS-Verbindung, wird das Endgerät aufgrund des zur Datenübertragung in dem Mobilfunknetz verwendeten Protokolls zum Verbindungsaufbau über ein alternatives Mobilfunknetz, insbesondere über das GSM-Netz veranlasst. Dies geschieht bspw. im Rahmen einer sog. "Cell Reselection" Prozedur.

Nach dem Aufbau der Verbindung zu dem GSM-Netz, erfolgt die gesamte Gesprächsabwicklung in dem Endgerät dann in herkömmlicher Weise nach dem GSM-Standard. Zum Abhören der Gespräche können herkömmliche Verfahren eingesetzt werden, wie sie bspw. aus der DE 199 20 222 A1 bekannt sind. Bezüglich der bekannten Verfahren zum Abhören eines Endgeräts in einem GSM-Netz wird ausdrücklich auf diese Druckschrift verwiesen.

Gemäß einer anderen vorteilhaften Weiterbildung der vorliegenden Erfindung wird im Anschluss an die Identifikation des Endgeräts vorgeschlagen, dass
- mittels eines Monitor-Endgeräts die ermittelten Identitätsparameter und die Sicherheitsfähigkeiten (security capabilities) des identifizierten Endgeräts an eine reale Basisstation des Mobilfunknetzes übermittelt werden;
- die reale Basisstation RAND (Zufallszahl) und AUTN (Authentifizierungstoken) an das Monitor-Endgerät zurücksendet;
- der Simulator die Verbindung zu der realen Basisstation des Mobilfunknetzes abbricht;
- der Simulator als eine andere Basisstation einer anderen Funkzelle eines GSM-Mobilfunknetzes betrieben wird und eine Verbindung zu dem identifizierten Endgerät aufbaut;
- eine Authentifizierungsprozedur zwischen dem identifizierten Endgerät und dem Simulator gestartet wird; und
- falls die Authentifizierungsprozedur erfolgreich beendet wird, der Simulator das identifizierte Endgerät veranlasst, keine Verschlüsselung bei der nachfolgenden Datenübertragung anzuwenden.

Der Simulator baut nach dem Abbruch der Verbindung zu der realen Basisstation des Mobilfunknetzes die andere Verbindung zu dem identifizierten Endgerät über eine Basisstation einer GSM (Global System for Mobile Communication)-Funkzelle auf.

Das Monitor-Endgerät ist vorzugsweise Teil des Simulators. Bei den Zahlengruppen RAND und AUTN, die der Simulator von einer realen Basisstation des Mobilfunknetzes erhält, handelt es sich um Parameter, die in UMTS zur Authentifizierung einer Basisstation gegenüber einem Endgerät benötigt werden. Das Monitor-Endgerät täuscht der realen Basisstation also einen Verbindungswunsch vor und veranlasst die reale Basisstation somit, RAND und AUTN an den Simulator zu übermitteln. Aus Sicht der realen Basisstation handelt es sich bei dem Simulator um ein reales Endgerät. Erst mit Hilfe der Parameter RAND und AUTN ist es überhaupt möglich, eine Gesprächsverbindung zwischen einer Basisstation und einem identifizierten abzuhörenden Endgerät aufzubauen.

Der Verbindungsaufbau zu dem abzuhörenden Endgerät erfolgt dann anhand einer simulierten GSM-Basisstation einer GSM-Funkzelle eines GSM-Mobilfunknetzes. Die simulierte GSM-Basisstation ist vorzugsweise Teil des Simulators. Nach erfolgter Authentifizierung sendet die simulierte GSM-Basisstation Sicherheitsparameter an das abzuhörende Endgerät. Die Sicherheitsparameter umfassen unter anderem einen Befehl an das Endgerät, ohne Verschlüsselung zu arbeiten (sog. "No Encryption"-Parameter), d.h. Daten unverschlüsselt zu übertragen.

Das gemäß dieser Weiterbildung vorgeschlagene Konzept arbeitet mit zwei unterschiedlichen Mobilfunknetzen, nämlich mit UMTS- und GSM-Netzen. Aus diesem Grund muss das abzuhörende Endgerät ein Multi-Radio-Mode-Endgerät sein, das mehrere unterschiedliche Mobilfunknetze, nämlich UMTS- und GSM-Netze, unterstützt. Das Konzept umfasst eine simulierte GSM-Basisstation, eine simulierte UMTS-Basisstation, und ein Monitor-Endgerät. Die Verzögerungszeiten zwischen dem Zugriff auf die Authentifizierungsparameter und der Unterdrückung der Verschlüsselung sollte möglichst kurz sein, um zu verhindern, dass von dem realen UMTS-Netz neue RAND und AUTN vor der Unterdrückung der Verschlüsselung erzeugt werden. Die Verzögerungszeiten sollten im Bereich von wenigen Sekunden, maximal im Minutenbereich liegen.

Als eine weitere Lösung der Aufgabe der vorliegenden Erfindung wird ausgehend von dem Simulator zum Identifizieren eines mobilen Endgeräts in einem digitalen zellulären Mobilfunknetz der eingangs genannten Art vorgeschlagen, dass der Simulator gekennzeichnet ist durch
- ein Messsystem zur Ermittlung der für die Datenübertragung relevanten Parameter von Basisstationen des Mobilfunknetzes in räumlicher Nähe zum Simulator;
- Mittel zum Betreiben des Simulators als eine neue Basisstation des Mobilfunknetzes unter Berücksichtigung der ermittelten Parameter;
- Mittel zum Empfang von Identifikationsparametern des zu identifizierenden Endgeräts während der Anmeldung des Endgeräts bei dem Simulator, wobei
- eine Authentifizierungsprozedur gestartet wird, das zu identifizierende Endgerät die Authentifizierungsprozedur als fehlerhaft abweist, der Simulator eine Identifikationsprozedur startet, in deren Verlauf der Simulator das zu identifizierende Endgerät nach seinen Identifikationsparametern fragt und der Simulator die Identifikationsparameter des zu identifizierenden Endgeräts empfängt; und
- Mittel zum Identifizieren des Endgeräts im Umfeld des ersten Protokolls anhand der übermittelten Identifikationsparameter.

Vorteilhafterweise weist der Simulator Mittel auf, um den Anmeldeversuch des zu identifizierenden Endgeräts bei dem Simulator nach der Identifizierungsprozedur zurückzuweisen oder die Verbindung zwischen dem Endgerät und der neuen Basisstation auf andere Weise zu unterbrechen und/oder zu stören, wobei das Endgerät dadurch zur automatischen Anmeldung bei einer anderen Basisstation einer anderen Funkzelle eines alternativen Mobilfunknetzes, in dem Daten nach einem zweiten, von dem ersten Protokoll abweichenden Protokoll übertragen werden, gezwungen wird, im Umfeld des zweiten Protokolls das zu identifizierende Endgerät im Rahmen der Anmeldung seine Identifikationsparameter übermittelt und der Simulator Mittel zum Empfangen der Identifikationsparameter des zu identifizierenden Endgeräts aufweist.

Gemäß einer vorteilhaften Weiterbildung der Erfindung wird vorgeschlagen, dass der Simulator Mittel zur Ausführung des erfindungsgemäßen Verfahrens aufweist.

Ein bevorzugtes Ausführungsbeispiel der Erfindung wird nachfolgend anhand der Figuren näher erläutert. Es zeigen:
- Figur 1: ein erfindungsgemäßer Simulator zum Identifizieren eines mobilen Endgeräts in einem digitalen zellulären Mobilfunknetz gemäß einer bevorzugten Ausführungsform;
- Figur 2: eine Abbildung von UMTS-Funkzellen mit unterschiedlichen Location Area Codes;
- Figur 3: ein Ablaufdiagramm eines erfindungsgemäßen Verfahrens zur Identifikation eines Endgeräts gemäß einer ersten Ausführungsform;
- Figur 4: ein Ablaufdiagramm eines erfindungsgemäßen Verfahrens zur Identifikation eines Endgeräts gemäß einer zweiten Ausführungsform; und
- Figur 5: ein Ablaufdiagramm eines erfindungsgemäßen Verfahrens zum Abhören eines Endgeräts gemäß einer bevorzugten Ausführungsform.

Sicherheitskräften obliegen unter anderem die Aufgaben, bereits begangene Verbrechen aufzuklären bzw. noch nicht begangene Verbrechen abzuwehren. Ein wichtiger Aspekt bei der Erfüllung dieser Aufgaben ist die Möglichkeit, in begründeten Ausnahmefällen eine verdächtige Person anhand eines von ihr benutzten Mobiltelefons identifizieren und von der Person über das Mobiltelefon geführte Telefongespräche abhören, aufzeichnen und auswerten zu können.

Es gibt verschiedene Mobilfunknetze zur Datenübertragung. Sehr weit verbreitet sowohl bezüglich der Netzabdeckung als auch bezüglich der Anzahl der im Einsatz befindlichen mobilen Endgeräte sind GSM (Global System for Mobile Communications)-Mobilfunknetze. Seit einigen Jahren verfügbar und zunehmend verbreitet sind UMTS (Universal Mobile Telecommunications System)-Mobilfunknetze. Diese beiden Standards unterscheiden sich bspw. hinsichtlich der Authentifizierung, des Integritätsschutzes und der Verschlüsselung. Ein weiterer Unterschied besteht darin, dass in UMTS ein so genanntes Code Division Multiple Access-Verfahren (CDMA) eingesetzt wird, während GSM auf eine Kombination von Frequency Division Multiple Access- und Time Division Multiple Access-Verfahren (FDMA/TDMA) zurückgreift. Aufgrund dieser markanten Unterschiede können in GSM-Netzen eingesetzte Verfahren und Vorrichtungen zum Identifizieren und Abhören eines mobilen Endgeräts nicht auf UMTS-Netze übertragen werden.

Die vorliegende Erfindung schlägt erstmals ein Verfahren vor, mit dem auch in UMTS-Mobilfunknetzen vor Ort Endgeräte von verdächtigen Personen identifiziert und gegebenenfalls abgehört werden können.

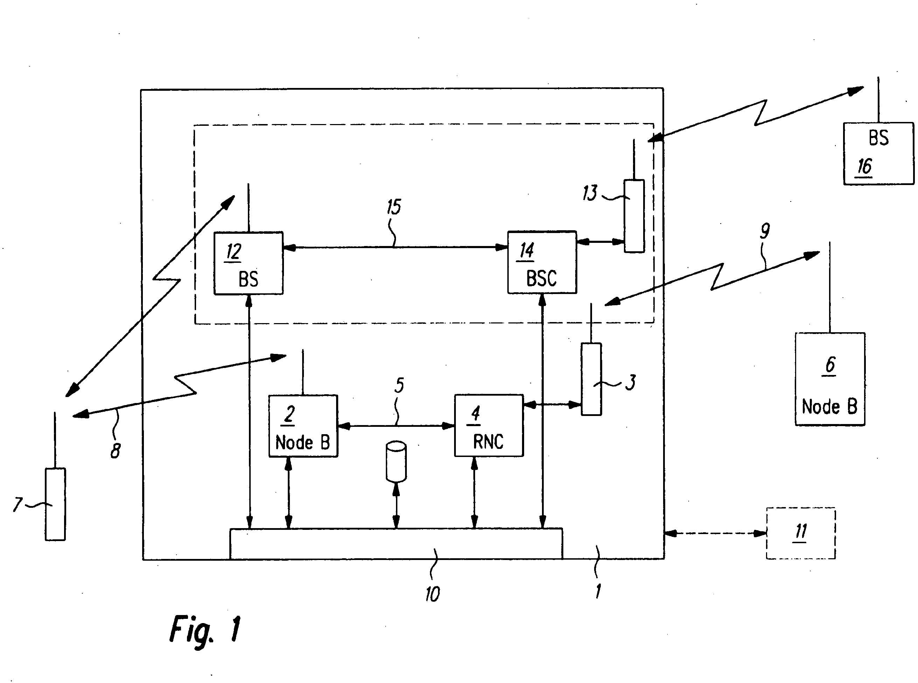

In Figur 1 ist eine Vorrichtung zur Ausführung des erfindungsgemäßen Verfahrens, eine erfindungsgemäße Vorrichtung, ein sog. UTRAN (UMTS Terrestrial Radio Access Network)-Simulator, in ihrer Gesamtheit mit dem Bezugszeichen 1 bezeichnet. Der Simulator 1 umfasst eine simulierte UMTS-Basisstation 2, die als NodeB bezeichnet wird, und ein simuliertes Monitor-Endgerät 3, das nach dem UMTS-Standard arbeitet und als Monitor-UE (User Equipment) bezeichnet wird. Außerdem umfasst der Simulator 1 eine RNC (Radio Network Controller)-Funktionalität 4. Zwischen dem simulierten NodeB 2 und der RNC-Funktionalität 4 ist eine sog. Iub-Schnittstelle 5 vorgesehen. Außerdem ist ein Steuer- und Bedienrechner 10 vorgesehen, welcher den Ablauf des erfindungsgemäßen Verfahrens steuert.

Darüber hinaus umfasst der Simulator 1 eine simulierte GSM-Basisstation 12, die als Basestation (BS) bezeichnet wird, und ein simuliertes GSM-Endgerät 13, das nach dem GSM-Standard arbeitet. Das simulierte UMTS-Endgerät 3 und das simulierte GSM-Endgerät 13 können auch zu einer Einheit zusammengefasst sein. Das ist ohne weiteres möglich, da UMTS-Endgeräte üblicherweise sowieso eine GSM-Funktionalität aufweisen, um eine sichere und zuverlässige Gesprächsverbindung auch in Gebieten mit nur unzureichender UMTS-Abdeckung sicherstellen zu können. Außerdem weist der Simulator 1 eine BSC (Base Station Controller)-Funktionalität 14. auf. Zwischen der simulierten BS 12 und der BSC-Funktionalität 14 ist eine Schnittstelle 15 vorgesehen.

Des weiteren ist ein externes Messsystem 11 vorgesehen, das die für UMTS relevanten Parameter der den Simulator 1 umgebenden Basisstationen misst. Selbstverständlich kann das Messsystem 11 auch in den Simulator 1 integriert sein. Als Messsystem 11 wird vorzugsweise das UMTS-Monitor-Endgerät 3 genutzt, sodass kein zusätzliches Messsystem mehr erforderlich ist. Das Messsystem 3 bzw. 11 erstellt einen Überblick über das zelluläre UMTS-Umfeld, der dann an den UTRAN-Simulator 1 übermittelt wird.

Der Simulator 1 wird zur Realisierung des Verfahrens in eine reale UMTS-Umgebung eingebracht, welche eine reale Basisstation (NodeB) 6 und ein reales Endgerät (UE) 7 umfasst. Selbstverständlich kann die UMTS-Umgebung mehr Basisstationen als die dargestellte Basisstation 6 und mehr Endgeräte als das dargestellte Endgerät 7 umfassen. Das Endgerät 7 ist das zu identifizierende und ggf. abzuhörende Endgerät und wird auch als Target-UE bezeichnet. Ein beliebiges UMTS-Endgerät wird gemäß der hier verwendeten Terminologie zu einem Target-UE 7, wenn es sich im UTRAN-Simulator 1 angemeldet (auch partiell) oder eingebucht hat. Zwischen dem realen Endgerät 7 und dem simulierten NodeB 2 ist eine Uu-Luftschnittstelle 8 vorgesehen. Zwischen dem simulierten Endgerät 3 und dem realen NodeB 6 ist eine weitere Luftschnittstelle 9 vorgesehen.

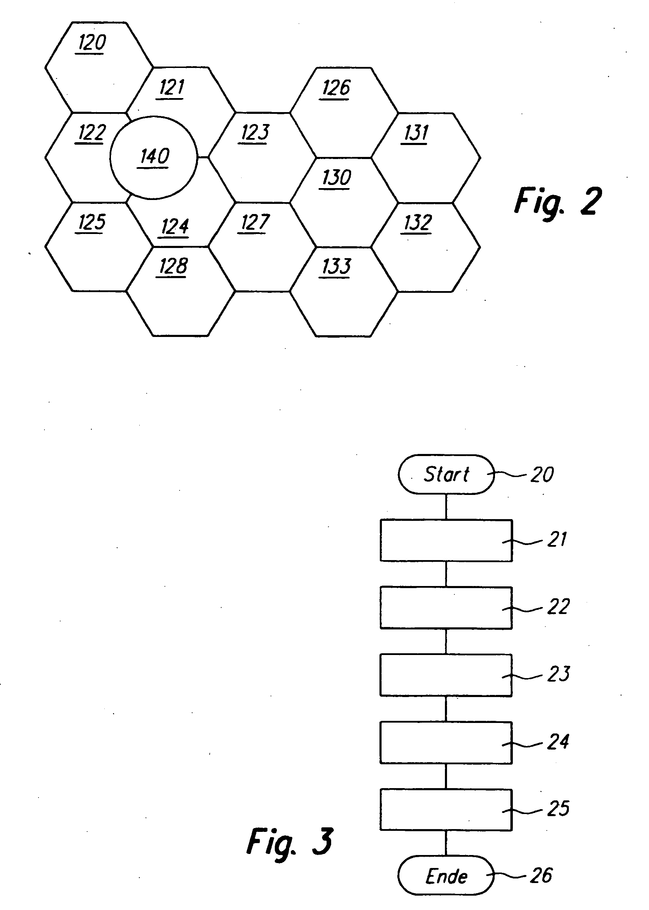

In Figur 2 ist ein zelluläres UMTS-Mobilfunknetz dargestellt, das eine Vielzahl von Funkzellen 120-128, 130-133 umfasst. Einige der Funkzellen 120-128 gehören zu einer ersten sog. Location Area, wobei allen Funkzellen 120-128 der gleiche Location Area Code (LAC) zugeordnet ist (z.B. LAC=1000). Andere Funkzellen 130-133 gehören zu einer zweiten Location Area, wobei allen Funkzellen 130-133 der gleiche Location Area Code zugeordnet ist (z.B. LAC=2000), der sich von dem ersten Location Area Code unterscheidet. Basisstationen (NodeBs) decken eine oder mehrere der Funkzellen 120-128, 130-133 ab. Die Basisstationen sind jedoch der besseren Übersichtlichkeit wegen in Figur 2 nicht dargestellt.

In Figur 3 ist ein Ablaufdiagramm des erfindungsgemäßen Verfahrens zur Identifikation des Endgeräts 7 dargestellt. Das Verfahren beginnt in einem Funktionsblock 20. Der Simulator 1 wird in der räumlichen Nähe zu dem zu identifizierenden UMTS-Endgerät 7 in dem UMTS-Netz angeordnet (Funktionsblock 21). Der UTRAN-Simulator 1 wird in einer der geographischen Funkzellen 120-128, 130-133 betrieben, in deren Basisstation das zu identifizierende Endgerät 7 eingebucht ist. Möglicherweise ist das Endgerät 7 zusammen mit anderen Endgeräten in der Basisstation eingebucht. Mit dem Messsystem 3; 11 werden in einem Funktionsblock 22 die für UMTS relevanten Parameter der den Simulator 1 umgebenden Basisstationen gemessen bzw. auf andere Weise erfasst und an den Simulator 1 übergeben. Diese Parameter umfassen bspw. sog. Scrambling Codes der Funkzellen 120-128, 130-133, die Sendeleistungen der Basisstationen, Identitätsparameter der NodeBs und Systeminformationen.

In einem Funktionsblock 23 sendet der UTRAN-Simulator 1 seinerseits Systeminformationen in dem gleichen Frequenzband, wie die benachbarten Basisstationen, jedoch mit einer höheren Sendeleistung, so dass die in der räumlichen Nähe zu dem Simulator 1 angeordneten Endgeräte (und damit auch das zu identifizierende Endgerät 7) den Simulator 1 als neue (simulierte) Basisstation erkennen. Außerdem sendet der Simulator 1 mit einer anderen Location Area Code (z.B. LAC=3000), damit die in der räumlichen Nähe zu dem Simulator 1 angeordneten Endgeräte (und damit auch das zu identifizierende Endgerät 7) den Eindruck bekommen, sie hätten sich räumlich in einen neuen Bereich mit einem neuen LAC, also in ein neues Location Area bewegt. Der LAC der simulierten Basisstation 2 ist derart gewählt, dass er von den regulären Basisstationen 6 in der Umgebung des Simulators 1 nicht verwendet wird.

Dadurch wird in diesen Endgeräten (und damit auch in dem zu identifizierenden Endgerät 7) eine sog. Location Update Prozedur initiiert, im deren Rahmen sich die Endgeräte mit ihren Identifikationsparametern bei der simulierten Basisstation 2 anmelden (Funktionsblock 24). Die Identifikationsparameter umfassen bspw. eine IMSI (International Mobile Subscriber Identity), eine TMSI (Temporary Mobile Subscriber Identity) und/oder eine IMEI (International Mobile Equipment Identity). Anhand dieser Identifikationsparameter erfolgt dann in einem Funktionsblock 25 eine Identifikation des Endgeräts 7. In einem Funktionsblock 26 ist das Verfahren zur Identifikation des Endgeräts 7 beendet. Der simulierte räumliche Bereich mit einer neuen LAC ist in Figur 2 mit dem Bezugszeichen 140 bezeichnet.

Der eigentliche Name und die persönlichen Daten des Benutzers des Endgeräts 7 sind beim Betreiber (sog. Provider) des Mobilfunknetzes abgelegt und können von dort bspw. im Rahmen einer Behördenanfrage oder auf anderem Wege erfragt werden. Nur beim Provider sind sog. Cross-Reference-Listen verfügbar, die eine Zuordnung der IMSI zu einem Benutzer bzw. der IMSI zu einer Rufnummer ermöglichen. Die TMSI ist - wie der Name schon sagt - lediglich temporärer Natur und erlaubt keine eindeutige Zuordnung zu einem bestimmten Benutzer oder einer bestimmten Rufnummer. Aus diesem Grund ist es wichtig, dass die IMSI oder die IMEI und nicht nur die TMSI zur Verfügung steht.

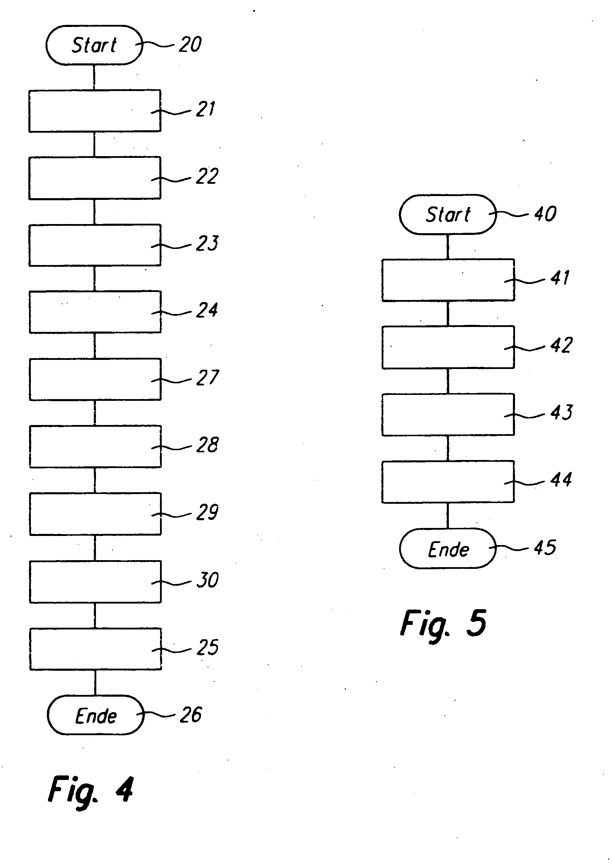

Falls das zu identifizierende Endgerät 7 beim Anmelden bei dem Simulator 1 in Funktionsblock 24 lediglich die TMSI (Temporary Mobile Subscriber Identity) als Identifikationsparameter übermittelt und eine Authentifizierungsprozedur erwartet, kann die Erfindung gemäß dem Ablaufdiagramm aus Figur 4 dahingehend ergänzt werden, dass im Anschluss an die Anmeldung des Endgeräts 7 bei dem Simulator 1 in einem Funktionsblock 27 die Authentisierungsprozedur gestartet wird. Da sich jedoch der Simulator 1 bzw. die simulierte Basisstation 2 als Teil des Simulators 1 gegenüber dem Endgerät 7 nicht ausweisen kann (was in UMTS-Netzen jedoch erforderlich ist), weist das zu identifizierende Endgerät 7 in einem Funktionsblock 28 die Authentifizierungsprozedur als fehlerhaft ab, bspw. aufgrund eines MAC-Fehlers. Nun startet der Simulator 1 in einem Funktionsblock 29 seinerseits eine Identifizierungsprozedur, wodurch dem zu identifizierenden Endgerät der Eindruck 7 vorgetäuscht wird, die simulierte Basisstation 2 benötige zu Identifikationszwecken die IMSI des zu identifizierenden Endgeräts 7. Daraufhin übermittelt das Endgerät 7 in einem Funktionsblock 30 seine IMSI an den Simulator 1, anhand der in dem Funktionsblock 25 eine eindeutige Identifikation des Endgeräts 7 möglich ist. In dem Funktionsblock 26 ist das Verfahren beendet.

Im Anschluss an die Identifikation des Target-Endgeräts 7 gemäß den Verfahren nach Figur 3 und Figur 4 können über das Endgerät 7 geführte eingehende oder abgehende Gespräche auf verschiedene Weise abgehört werden. Gemäß einer ersten Ausführungsform, deren Ablaufdiagramm in Figur 5 dargestellt ist, beginnt das Verfahren zum Abhören des Endgeräts 7 in einem Funktionsblock 40. In einem Funktionsblock 41 findet die Identifikation des Endgeräts 7 statt. Der Block 41 umfasst somit sämtliche Verfahrensschritte 20 bis 26 der Figur 3 bzw. 20 bis 30 der Figur 4. Anschließend wird in einem Funktionsblock 42 die Location Update Prozedur des Endgeräts 7 von dem Simulator 1 bzw. der simulierten Basisstation 2 zurückgewiesen.

Daraufhin meldet sich das Endgerät 7 in einem Funktionsblock 43 nach einer sog. Cell Reselection Prozedur über die simulierte GSM-Basisstation 12 in einer GSM-Funkzelle eines GSM-Netzes an. UMTS-Endgeräte müssen laut Standard in der Lage sein, auch im GSM-Netz betrieben werden zu können. Die Abweisung eines Target-Endgerätes 7 vom UMTS-Netz in das GSM-Netz kann auf beliebige Weise erfolgen. So kann die Abweisung bspw. durch ein Kommando (eine festgelegte Information) erfolgen, das über den sog. BCCH (Broadcast Control Channel) ausgesendet wird. Alternativ kann die Abweisung auch über eine beliebige Nachricht erfolgen, die über den sog. FACH (Forward Access Channel) oder den sog. DCCH (Dedicated Control Channel) gesendet werden kann. Die in der Zelle 140 des UTRAN-Simulators 1 befindlichen UMTS-Endgeräte erhalten dieses Kommando (diese Information) und buchen sich in einem vorhandenen GSM-Netz ein. Es ist auch denkbar, die Verbindung zu dem UMTS-Netz auf andere Weise, bspw. durch Stören (sog. Jammen) zu beeinträchtigen und letzten Endes zu beenden.

Sämtliche über das Target-Endgerät 7 eingehende oder abgehende Gespräche werden nun nicht über das UMTS-Netzwerk, sondern über das GSM-Netzwerk geführt. Genauer gesagt, werden die Gespräche über die simulierte GSM-Basisstation 12, das simulierte GSM-Endgerät 13 und weiter zu einer realen GSM-Basisstation 16 geführt. In einem Funktionsblock 44 können dann die über das Target-Endgerät 7 in dem GSM-Umfeld geführten Gespräche mit herkömmlichen Verfahren, wie sie bspw. aus der DE 199 20 222 A1 bekannt sind, abgehört werden. In einem Funktionsblock 45 ist das Verfahren dann beendet.

Selbstverständlich ist es auch möglich, nicht nur das Abhören von über das Target-Endgerät 7 geführten Gesprächen, sondern bereits das Identifizieren des Endgeräts 7 in der GSM-Umgebung mit herkömmlichen Mitteln auszuführen. Dazu wird es noch bevor die Location Update Prozedur beendet ist, aus dem UMTS-Netz in das GSM-Netz abgewiesen und dort im GSM-Umfeld mittels bekannter Verfahren seine Identitätsparameter IMSI und IMEI erfasst. Außerdem ist dort auch eine weiterführende Manipulation der Target-Endgeräte 7 möglich.

Ebenso ist es gemäß der vorliegenden Erfindung möglich über das Target-Endgerät 7 geführte Gespräche durch einen sog. Quasi-Transparent-Prozess abzuhören. Dazu ist es erforderlich, dass sich der Simulator 1 zunächst Sicherheitsinformationen von der realen UMTS-Basisstation 6 beschafft und dann mit diesen Informationen eine Verbindung von der simulierten GSM-Basisstation 12 zu dem Endgerät 7 aufbaut. Ebenso muss mit Hilfe der zuvor im Rahmen der Identifikation beschafften Identifikationsparametern des Endgeräts 7 eine Verbindung von dem GSM-Endgerät 13 zu der realen GSM-Basisstation 16 aufgebaut werden. Gespräche von oder zu dem Target-Endgerät 7 werden nun nicht direkt zu der realen Basisstation 6 bzw. 16 geführt, sondern lediglich indirekt über den UTRAN-Simulator 1. In dem Simulator 1 können die abgehörten Gespräche ganz oder teilweise aufgezeichnet werden, bspw. für eine spätere Auswertung oder zur Beweissicherung. Des weiteren werden die Gespräche zwangsweise über das GSM-Netzwerk und nicht über das UMTS-Netzwerk geführt, selbst wenn eine ausreichende UMTS-Abdeckung gegeben wäre.

## Patentansprüche

1. Verfahren zum Identifizieren eines mobilen Endgeräts (7) in einem digitalen zellulären Mobilfunknetz, in dem Daten nach einem ersten Protokoll übertragen werden, umfassend die nachfolgenden, im Umfeld des ersten Protokolls ausgeführten Schritte:
- in räumlicher Nähe zu dem zu identifizierenden Endgerät (7) wird ein Simulator (1) angeordnet;
- von einem Messsystem (11) werden die für die Datenübertragung relevanten Parameter von Basisstationen (6) des Mobilfunknetzes in räumlicher Nähe zum Simulator (1) ermittelt und an den Simulator (1) übergeben;
- der Simulator (1) wird unter Berücksichtigung der ermittelten Parameter als eine neue Basisstation (2) betrieben;
- das zu identifizierende Endgerät (7) erkennt den Simulator (1) als neue Basisstation (2) und meldet sich dort an, wobei
- eine Authentifizierungsprozedur gestartet wird, das zu identifizierende Endgerät (7) die Authentifizierungsprozedur als fehlerhaft abweist, der Simulator (1) eine Identifizierungsprozedur startet, in deren Verlauf der Simulator (1) das zu identifizierende Endgerät (7) nach seinen Identifikationsparametern fragt und der Simulator (1) die Identifikationsparameter des zu identifizierenden Endgeräts (7) empfängt; und
- das Endgerät (7) wird im Umfeld des ersten Protokolls anhand der übermittelten Identifikationsparameter identifiziert.

2. Verfahren nach Anspruch 1, **dadurch gekennzeichnet, dass** der Anmeldeversuch des zu identifizierenden Endgeräts (7) bei dem Simulator (1) nach der Identifizierungsprozedur zurückgewiesen wird oder die Verbindung zwischen dem Endgerät (7) und der neuen Basisstation (2) auf andere Weise unterbrochen und/oder gestört wird, das Endgerät (7) zur automatischen Anmeldung bei einer anderen Basisstation einer anderen Funkzelle eines alternativen Mobilfunknetzes, in dem Daten nach einem zweiten, von dem ersten Protokoll abweichenden Protokoll übertragen werden, gezwungen wird, im Umfeld des zweiten Protokolls das zu identifizierende Endgerät (7) im Rahmen der Anmeldung seine Identifikationsparameter übermittelt und der Simulator (1) die Identifikationsparameter des Endgeräts (7) empfängt.

3. Verfahren nach Anspruch 1 oder 2, **dadurch gekennzeichnet, dass** zum Zwecke eines Abhörens, einer Peilung und/oder einer Ortung das Endgerät (7) nach der Identifizierung zu dem alternativen Mobilfunknetz, in dem die Daten nach dem von dem ersten Protokoll abweichenden zweiten Protokoll übertragen werden, abgewiesen wird.

4. Verfahren nach einem der Ansprüche 1 bis 3, **dadurch gekennzeichnet, dass** in dem Mobilfunknetz als erstes Protokoll ein UMTS-Protokoll verwendet wird.

5. Verfahren nach einem der Ansprüche 1 bis 4, **dadurch gekennzeichnet, dass** in dem alternativen Mobilfunknetz als zweites Protokoll ein GSM-Protokoll verwendet wird.

6. Verfahren nach einem der Ansprüche 1 bis 5, **dadurch gekennzeichnet, dass** von dem Messsystem (11) als für die Datenübertragung relevante Parameter die von den umgebenden Basisstationen (6) verwendeten Scrambling Codes, Betriebsfrequenzen und/oder Sendestärken ermittelt werden.

7. Verfahren nach einem der Ansprüche 1 bis 6, **dadurch gekennzeichnet, dass** das zu identifizierende Endgerät (7) beim Anmelden bei dem Simulator (1) bzw. im Rahmen der Identifizierungsprozedur mindestens einen der nachfolgenden Identifikationsparameter an den Simulator (1) übermittelt: IMSI, TMSI, P-TMSI und IMEI.

8. Verfahren nach Anspruch 7, **dadurch gekennzeichnet, dass**, falls das zu identifizierende Endgerät (7) beim Anmelden bei dem Simulator (1) lediglich die TMSI als Identifikationsparameter übermittelt,
- bei Ablehnung der Identifizierungsprozedur durch das zu identifizierende Endgerät (7) :
- eine Authentifizierungsprozedur gestartet wird;
- das zu identifizierende Endgerät (7) die Authentifizierungsprozedur als fehlerhaft abweist;
- von dem Simulator (1) nochmals eine Identifizierungsprozedur gestartet wird, in deren Verlauf der Simulator (1) das zu identifizierende Endgerät (7) nach seiner IMSI und/oder seiner IMEI fragt; und
- der Simulator (7) die IMSI und/oder die IMEI des zu identifizierenden Endgeräts (7) empfängt.

9. Verfahren nach einem der Ansprüche 1 bis 8, **dadurch gekennzeichnet, dass** der Simulator (1) in dem gleichen Frequenzband, jedoch mit höherer Leistung als die den Simulator (1) umgebenden Basisstationen (6) sendet.

10. Verfahren nach einem der Ansprüche 1 bis 9, **dadurch gekennzeichnet, dass** der Simulator (1) in der gleichen oder in einer in räumlicher Nähe befindlichen geografischen Funkzelle (120-128, 130-133) betrieben wird, in deren Basisstation (6) das zu identifizierende Endgerät (7) ursprünglich eingebucht ist.

11. Verfahren nach einem der Ansprüche 1 bis 10 **dadurch gekennzeichnet, dass** dem zu identifizierenden Endgerät (7) durch die Anwesenheit des als neue Basisstation (2) betriebenen Simulators (1) eine Bewegung des Endgeräts (7) in einen neuen räumlichen Bereich, dem ein anderer Location Area Code zugeordnet ist, vorgetäuscht wird und aufgrund des in dem Mobilfunknetz zur Datenübertragung verwendeten ersten Protokolls das Endgerät (7) zur automatischen Anmeldung bei dem Simulator (1) gezwungen wird.

12. Verfahren nach einem der Ansprüche 1 bis 11, **dadurch gekennzeichnet, dass**
- mittels eines Monitor-Endgeräts (3) die ermittelten Identitätsparameter und die Sicherheitsfähigkeit des identifizierten Endgeräts (7) an eine reale Basisstation (6) des Mobilfunknetzes übermittelt werden;
- die reale Basisstation (6) eine zufallszahl und einen Authentifizierungstoken an das Monitor-Endgerät (3) zurücksendet;
- der Simulator (1) die Verbindung zu der realen Basisstation (6) des Mobilfunknetzes abbricht;
- der Simulator (1) als eine andere Basisstation (12) einer anderen Funkzelle eines GSM-Mobilfunknetzes betrieben wird und eine andere Verbindung zu dem identifizierten Endgerät (7) aufbaut;
- eine Authentifizierungsprozedur zwischen dem identifizierten Endgerät (7) und dem Simulator (1) gestartet wird; und
- falls die Authentifizierungsprozedur erfolgreich beendet wird, der Simulator (1) das identifizierte Endgerät (7) veranlasst, keine Verschlüsselung bei der nachfolgenden Datenübertragung anzuwenden.

13. Simulator (1) zum Identifizieren des mobilen Endgeräts (7) in einem digitalen zellulären Mobilfunknetz, der in räumlicher Nähe zu einem zu identifizierenden mobilen Endgerät (7) angeordnet ist, wobei in dem Mobilfunknetz Daten nach einem ersten Protokoll übertragen werden, umfassend:
- ein Messsystem (11) zur Ermittlung der für die Datenübertragung relevanten Parameter von Basisstationen (6) des Mobilfunknetzes in räumlicher Nähe zum Simulator (1);
- Mittel (2) zum Betreiben des Simulators (1) als eine neue Basisstation des Mobilfunknetzes unter Berücksichtigung der ermittelten Parameter;
- Mittel (2) zum Empfang von Identifikationsparametern des zu identifizierenden Endgeräts (7) während der Anmeldung des Endgeräts (7) bei dem Simulator (1), wobei
- das zu identifizierende Endgerät (7) Mittel zum Abweisen einer Authentifizierungsprozedur als fehlerhaft aufweist,
- der Simulator (1) Mittel zum Starten einer Identifizierungsprozedur im Anschluss an die Abweisung der Authentifizierungsprozedur und Mittel zum Fragen des zu identifizierenden Endgeräts (7) nach seinen Identifikationsparametern aufweist; und
- Mittel (10) zum Identifizieren des Endgeräts (7) im Umfeld des ersten Protokolls anhand der übermittelten Identifikationsparameter.

14. Simulator (1) nach Anspruch 13, **dadurch gekennzeichnet, dass** der Simulator (1) Mittel zum Zurückweisen des Anmeldeversuchs des zu identifizierenden Endgeräts (7) bei dem Simulator (1) nach der Identifizierungsprozedur oder zum Unterbrechen und/oder Stören auf andere Weise der Verbindung zwischen dem Endgerät (7) und der neuen Basisstation (2) aufweist und der Simulator (1) das Endgerät (7) **dadurch** zur automatischen Anmeldung bei einer anderen Basisstation einer anderen Funkzelle eines alternativen Mobilfunknetzes, in dem Daten nach einem zweiten, von dem ersten Protokoll abweichenden Protokoll übertragen werden, zwingt und dass der Simulator (1) Mittel (12) zum Empfangen der im Umfeld des zweiten Protokolls im Rahmen der Anmeldung von dem zu identifizierenden Endgerät (7) übermittelten Identifikationsparameter des Endgeräts (7) aufweist.

15. Simulator (1) nach Anspruch 13 oder 14, **dadurch gekennzeichnet, dass** der Simulator (1) Mittel zur Ausführung eines Verfahrens nach einem der Ansprüche 3 bis 12 aufweist.

## Claims

1. Method for identifying a mobile terminal (7) in a digital cellular mobile radio network in which data are transmitted according to a first protocol, comprising the following steps within the context of the first protocol:
- a simulator (1) is arranged in spatial proximity to the terminal (7) to be identified;
- the parameters of base stations (6) of the mobile radio network that are in spatial proximity to the simulator (1) and are relevant for data transmission are detected by a measuring system (11) and transferred to the simulator (1);
- the simulator (1) is operated as a new base station (2), taking account of the parameters detected;
- the terminal (7) to be identified recognises the simulator (1) as a new base station (2) and signs on there, wherein
- an authentication procedure is started, the terminal (7) to be identified rejects the authentication procedure as faulty, the simulator (1) starts an identification procedure in the course of which the simulator (1) requests from the terminal (7) to be identified its identification parameters and the simulator (1) receives the identification parameters of the terminal (7) to be identified; and
- the terminal (7) is identified in the context of the first protocol, based on the identification parameters transferred.

2. Method according to claim 1, **characterised in that** the sign-on attempt at the simulator (1) by the terminal (7) to be identified is refused following the identification procedure or the connection between the terminal (7) and the new base station (2) is interrupted and/or disturbed by other means, the terminal (7) is forced into automatic signing-on at another base station of another radio cell of an alternative mobile radio network in which data are transmitted according to a second protocol which differs from the first protocol, in the context of the second protocol, the terminal (7) to be identified transfers its identification parameters and the simulator (1) receives the identification parameters of the terminal (7).

3. Method according to claim 1 or 2, **characterised in that**, for the purpose of interception, direction finding and/or position finding, following identification, the terminal (7) is rejected to the alternative mobile radio network in which the data are transferred according to the second protocol which differs from the first protocol.

4. Method according to one of the claims 1 to 3, **characterised in that** a UMTS protocol is used in the mobile radio network as the first protocol.

5. Method according to one of the claims 1 to 4, **characterised in that** a GSM protocol is used as the second protocol in the alternative mobile radio network.

6. Method according to one of the claims 1 to 5, **characterised in that** the scrambling codes, operating frequencies and/or transmission strengths used by the surrounding base stations (6) are detected by the measuring system (11) as being the parameters which are relevant for the data transfer.

7. Method according to one of the claims 1 to 6, **characterised in that**, when signing on at the simulator (1), in the context of the identification procedure, the terminal (7) to be identified transfers at least one of the following identification parameters to the simulator (1): IMSI, TMSI, P-TMSI and IMEI.

8. Method according to claim 7, **characterised in that** if, when signing on at the simulator (1), the terminal (7) to be identified transfers only the TMSI as the identification parameter, if the terminal (7) to be identified refuses the identification procedure:
- an authentication procedure is started;
- the terminal (7) to be identified rejects the authentication procedure as faulty;
- a new identification procedure, in the course of which the simulator (1) requests of the terminal (7) to be identified its IMSI and/or its IMEI, is started by the simulator (1); and
- the simulator (1) receives the IMSI and/or the IMEI of the terminal (7) to be identified.

9. Method according to one of the claims 1 to 8, **characterised in that** the simulator (1) transmits on the same frequency band as the base stations (6) surrounding the simulator (1), but at a higher power than said base stations.

10. Method according to one of the claims 1 to 9, **characterised in that** the simulator (1) is operated in the same geographical radio cell or in a radio cell (120-128, 130-133) situated in spatial proximity thereto, in the base station (6) of which the terminal (7) to be identified was originally logged in.

11. Method according to one of the claims 1 to 10, **characterised in that** a movement of the terminal (7) into a new spatial domain to which a different Location Area Code is allocated is feigned to the terminal (7) to be identified by the presence of the simulator (1) operated as a new base station (2) and, on the basis of the first protocol used for data transmission in the mobile radio network, the terminal (7) is forced into automatic signing-on at the simulator (1).

12. Method according to one of the claims 1 to 11, **characterised in that**
- by means of a monitor terminal (3), the identification parameters detected and the security capability of the terminal (7) identified are transferred to a real base station (6) of the mobile radio network;
- the real base station (6) returns to the monitor terminal (3) a random number and an authentication token;
- the simulator (1) breaks off the connection with the real base station (6) of the mobile radio network;
- the simulator (1) is operated as a different base station (12) of another radio cell of a GSM mobile radio network and establishes another connection to the identified terminal (7);
- an authentication procedure is started between the identified terminal (7) and the simulator (1); and
- if the authentication procedure is successfully ended, the simulator (1) causes the identified terminal (7) to use no encryption in the subsequent data transmission.

13. Simulator (1) for identifying the mobile terminal (7) in a digital cellular mobile radio network, which is arranged in spatial proximity to a mobile terminal (7) to be identified, wherein data are transmitted in the mobile radio network according to a first protocol, comprising:
- a measuring system (11) for detecting the parameters of base stations (6) of the mobile radio network that are in spatial proximity to the simulator (1) and are relevant for data transmission;
- means (2) for operating the simulator (1) as a new base station of the mobile radio network, taking account of the parameters detected;
- means (2) for receiving identification parameters of the terminal (7) to be identified during the signing-on of the terminal (7) at the simulator (1), wherein
- the terminal (7) to be identified has means for rejecting an authentication procedure as faulty,
- the simulator (1) has means for starting an identification procedure following the rejection of the authentication procedure and means for requesting of the terminal (7) to be identified its identification parameters; and
- means (10) for identifying the terminal (7) in the context of the first protocol, based on the transmitted identification parameters.

14. Simulator (1) according to claim 13, **characterised in that** the simulator (1) has means for refusing the log-on attempt at the simulator (1) of the terminal (7) to be identified following the identification procedure or to interrupt and/or disrupt by other means the connection between the terminal (7) and the new base station (2) and the simulator (1) thereby forces the terminal (7) to log on automatically at another base station of another radio cell of an alternative mobile radio network in which data are transmitted according to a second protocol different from the first protocol, and that the simulator (1) has means (12) for receiving the identification parameters of the terminal (7) to be identified in the context of the second protocol during the signing-on.

15. Simulator (1) according to claim 13 or 14, **characterised in that** the simulator (1) has means for carrying out a method according to one of the claims 3 to 12.

## Revendications

1. Procédé d'identification d'un terminal mobile (7) dans un réseau de téléphonie mobile, cellulaire, numérique dans lequel on transmet les données selon un premier protocole, comprenant les étapes suivantes effectuées dans l'environnement du premier protocole :
- à proximité spatiale du terminal (7) à identifier, on installe un simulateur (1),
- un système de mesure (11) détermine les paramètres caractéristiques pour la transmission des données de stations de base (6) du réseau de téléphonie mobile à proximité spatiale du simulateur (1) et on les transmet au simulateur (1),
- on fait fonctionner le simulateur (1) comme une nouvelle station de base (2) en tenant compte des paramètres transmis,
- le terminal (7) à identifier reconnaît le simulateur (1) comme nouvelle station de base (2) et s'annonce dans cette base,
- on lance une procédure d'authentification est lancée, le terminal à identifier (7) rejette la procédure d'authentification comme erronée, le simulateur (1) lance une procédure d'identification au cours de laquelle le simulateur (1) demande au terminal à identifier (7) ses paramètres d'identification et le simulateur (1) reçoit les paramètres d'identification du terminal (7) à identifier et,
- le terminal (7) est identifié dans l'environnement du premier protocole à l'aide des paramètres d'identification transmis.

2. Procédé selon la revendication 1,
**caractérisé en ce que**
la tentative de déclaration du terminal (7) à identifier auprès du simulateur (1) est rejetée après la procédure d'identification ou la liaison entre le terminal (7) et la nouvelle station de base (2) est interrompue et/ou perturbée d'une autre manière,
le terminal (7) est forcé de se déclarer automatiquement auprès d'une autre station de base d'une autre cellule radio d'un réseau de téléphone mobile, alternatif, en transmettant des données selon un second protocole différent du premier protocole, on détermine, dans l'environnement du second protocole, le terminal (7) à identifier dans le cadre de la déclaration de ses paramètres d'identification et le simulateur (1) reçoit les paramètres d'identification du terminal (7).

3. Procédé selon la revendication 1 ou 2,
**caractérisé en ce que**
pour l'écoute, pour un repérage et/ou une localisation radio, on rejette le terminal (7) après identification par rapport au réseau de radio mobile alternatif **en ce que** l'on transmet les données selon le second protocole, différent du premier protocole.

4. Procédé selon l'une des revendications 1 à 3,
**caractérisé en ce que**
dans le réseau de téléphone mobile, on utilise comme premier protocole un protocole UMTS.

5. Procédé selon l'une des revendications 1 à 4,
**caractérisé en ce que**
dans le réseau de téléphonie mobile, alternatif, on utilise comme second protocole, un protocole GSM.

6. Procédé selon l'une des revendications 1 à 5,
**caractérisé en ce que**
pour la transmission des données, le système de mesure (11) détermine les paramètres caractéristiques à partir des codes de brouillage utilisés par les stations de base environnantes (6), les fréquences de fonctionnement et/ou des intensités d'émission.

7. Procédé selon l'une des revendications 1 à 6,
**caractérisé en ce que**
lors de sa déclaration chez le simulateur (1) ou dans le cadre de la procédure d'identification, le terminal (7) à identifier transmet, au moins l'un des paramètres d'identification suivants vers le simulateur (1) : IMSI, TMSI, P-TMSI et IMEI.

8. Procédé selon la revendication 7,
**caractérisé en ce que**
si le terminal (7) à identifier transmet uniquement le paramètre TMSI comme paramètre d'identification lors de sa déclaration chez le simulateur (1),
- lorsque la procédure d'identification est rejetée par le terminal d'identification (7) :
* on lance une procédure d'authentification,
* le terminal (7) à identifier rejette la procédure d'authentification comme erronée,
* le simulateur (1) lance une nouvelle fois une procédure d'identification et au cours de son déroulement, le simulateur demande au terminal (7) à identifier son numéro IMSI et/ou son numéro IMEI, et
* le simulateur (7) reçoit le numéro IMSI et/ou le numéro IMEI du terminal (7) à identifier.

9. Procédé selon l'une des revendications 1 à 8,
**caractérisé en ce que**
le simulateur (1) émet dans la même bande de fréquence mais avec une puissance plus élevée que celle des stations de base (6) entourant le simulateur (1).

10. Procédé selon l'une des revendications 1 à 9,
**caractérisé en ce que**
le simulateur (1) fonctionne dans la même cellule radio (120-128 ; 130-133) ou dans une cellule radio géographiquement proche (120-128 ; 130-133) dans lequel la station de base (6) a enregistré initialement le terminal à identifier (7).

11. Procédé selon l'une des revendications 1 à 10,
**caractérisé en ce qu'**
pour le terminal (7) à identifier, par la présence du simulateur (1) qui fonctionne comme une nouvelle station de base (2), on simule un mouvement du terminal (7) dans une nouvelle zone spatiale à laquelle est associé un autre code de localisation de zone et à partir du premier protocole utilisé pour la transmission des données dans le réseau de téléphonie mobile, le terminal (7) est forcé de se déclarer automatiquement auprès du simulateur (1).

12. Procédé selon l'une des revendications 1 à 11,
**caractérisé en ce que**
- à l'aide d'un terminal en forme de moniteur (3), on transmet les paramètres d'identification obtenus et la caractéristique de sécurité du terminal à identifier (7) à une station de base réelle (6) du réseau de téléphonie mobile ;
- la station de base réelle (6) renvoie un nombre aléatoire et un jeton d'authentification vers le terminal (3) en forme de moniteur ;
- le simulateur (1) coupe la liaison avec la station de base réelle (6) du réseau de téléphonie mobile ;
- le simulateur (1) fonctionne comme une autre station de base (12) d'une autre cellule radio d'un réseau de téléphonie mobile GSM et construit une autre liaison vers le terminal (7) à identifier ;
- on lance une procédure d'authentification entre le terminal identifié (7) et le simulateur (1) et
- si la procédure d'authentification se termine de façon réussie, le simulateur (1) demande au terminal à identifier (7) de n'appliquer aucun codage pour la transmission de données suivantes.

13. Simulateur (1) pour identifier des terminaux mobiles (7) dans un réseau de téléphone mobile cellulaire numérique installé à proximité spatiale d'un terminal mobile (7) à identifier, le réseau de téléphonie mobile recevant des données selon un premier protocole, comprenant les éléments suivants :
- un système de mesure (11) pour déterminer les paramètres caractéristiques de la transmission de données pour les stations de base (6) du réseau de téléphonie mobile à proximité spatiale du simulateur (1) ;
- des moyens (2) pour faire fonctionner le simulateur (1) comme nouvelle station de base du réseau de téléphonie mobile en tenant compte des paramètres obtenus ;
- des moyens (2) pour recevoir les paramètres d'identification du terminal (7) à identifier pendant la déclaration du terminal (7) auprès du simulateur (1) et
* le terminal (7) à identifier comporte des moyens pour rejeter une procédure d'authentification comme étant défectueuse,
* le simulateur (1) comporte des moyens pour démarrer une procédure d'identification à la suite du rejet de la procédure d'authentification et des moyens pour interroger le terminal (7) à identifier, pour lui demander ses paramètres d'identification ; et
- des moyens (10) pour identifier le terminal (7) dans l'environnement du premier protocole à l'aide des paramètres d'identification transmis.

14. Simulateur (1) selon la revendication 13,
**caractérisé en ce que**
le simulateur (1) comporte des moyens pour rejeter la tentative de déclaration du terminal (7) à identifier auprès du simulateur (1), après la procédure d'identification ou pour interrompre et/ou pour perturber d'une autre manière la liaison entre le terminal (7) et la nouvelle station de base (2),
le simulateur (1) force le terminal (7) ainsi pour se déclarer automatiquement dans une autre station de base d'une autre cellule radio d'un réseau alternatif de téléphonie mobile en transmettant les données selon un second protocole différent du premier protocole, et
le simulateur (1) comporte des moyens (12) pour recevoir dans l'environnement du second protocole, les paramètres d'identification du terminal (7) transmises au terminal d'identification (7) dans le cadre de la déclaration.

15. Simulateur (1) selon les revendications 13 ou 14,
**caractérisé en ce que**
le simulateur (1) comporte des moyens pour exécuter un procédé selon l'une des revendications 3 à 12.
